Europäisches Patentamt

European Patent Office

Office européen des brevets

(11) Veröffentlichungsnummer: **0 174 523**
B1

(12) **EUROPÄISCHE PATENTSCHRIFT**

(45) Veröffentlichungstag der Patentschrift:
**28.12.88**

(51) Int. Cl.⁴: **F 16 J 15/10**

(21) Anmeldenummer: **85110434.9**

(22) Anmeldetag: **20.08.85**

(54) Imprägnierte Weichstoffflachdichtung, insbesondere Zylinderkopfdichtung für Verbrennungskraftmaschinen, und ihr Herstellungsverfahren.

(30) Priorität: **29.08.84 DE 3431633**

(43) Veröffentlichungstag der Anmeldung:
**19.03.86 Patentblatt 86/12**

(45) Bekanntmachung des Hinweises auf die Patenterteilung:
**28.12.88 Patentblatt 88/52**

(84) Benannte Vertragsstaaten:
**DE FR GB IT SE**

(56) Entgegenhaltungen:
**DE-A- 2 637 249**
**DE-C- 804 678**
**FR-A- 2 499 463**

(73) Patentinhaber: **GOETZE AG,
Bürgermeister-Schmidt-Strasse 17,
D-5093 Burscheid 1 (DE)**

(72) Erfinder: **Bechen, Heribert, Dipl.-Ing., Wichheimer
Strasse 305, D-5000 Köln 80 (DE)**
Erfinder: **Giesen, Franz-Josef, Am Alten Turm 1a,
D-5068 Odenthal 3 (DE)**
Erfinder: **Lönne, Klaus, Dipl.-Ing.,
Bürgermeister-Schmitz-Strasse 50, D-5093 Burscheid
(DE)**
Erfinder: **Majewski, Klaus Peter, Dipl.-Ing., Am
Sportfeld 26, D-5093 Burscheid (DE)**

## Beschreibung

Die Erfindung betrifft eine imprägnierte Weichstoffflachdichtung, wie insbesondere eine Zylinderkopfdichtung für Verbrennungskraftmaschinen, bestehend aus einem gegebenenfalls metallisch verstärkten Faservlies aus asbesthaltigen oder asbestfreien Fasern und/oder Fasergemischen organischen und/oder anorganischen Ursprungs, einem Bindemittel und gegebenenfalls einem Füllstoff in pulveriger bis feinkörniger Form und einer Flüssigimprägnation des Faservlieses, wobei das flüssige Imprägniermittel in der einbaufertigen Dichtung zu einem plastischen bis elastischen Endzustand vernetzt ist, sowie das Herstellungsverfahren einer solchen Flachdichtung.

Weichstoffzylinderkopfdichtungen für Verbrennungskraftmaschinen bestehen aus gegebenenfalls metallisch verstärkten Faservliesen aus asbesthaltigen oder asbestfreien Fasern oder Fasergemischen organischen und/oder anorganischen Ursprungs, Bindemitteln auf der Basis von bevorzugt einem Kautschuk sowie gegebenenfalls Füllstoffen aus meist pulverigen bis feinkörnigen Materialien. Vor allem zur Erhöhung der Querschnittsdichtigkeit und der Festigkeit der Dichtungen ist es beispielsweise nach der DE-AS 23 04 558 bekannt, die Faservliese mit vernetzbaren Flüssigkeiten zu imprägnieren und das Imprägniermittel anschliessend in der fertigen Dichtungsplatte bevorzugt thermisch zu vernetzen. Das Imprägniermittel beeinflusst das Verformungsverhalten der Dichtungen unter Druckbelastung. So beginnt imprägniertes Faservliesmaterial gegenüber nichtimprägniertem Faservliesmaterial schon bei geringerer Druckbelastung zu fliessen und kann somit nur einer geringeren Druckbelastung ausgesetzt werden, beziehungsweise die Fliessgrenzen imprägnierter Faservliese liegen niedriger als die Fliessgrenzen nichtimprägnierter Faservliese. Diese niedrige Fliessgrenze ist besonders an den eingefassten Öffnungsrändern nachteilig, denn hier soll beim Einbau ein möglichst hoher Dichtpressungsdruck zur Erzielung einer optimalen Abdichtgüte vorliegen. Deshalb werden nach der DE-AS 23 04 505 die Weichstoffbreiche unterhalb der Einfassungen frei von Imprägniermittel gehalten, indem man die bereits fertig eingefassten Flachdichtungen durch bevorzugt Tauchen in dem Imprägniermittelbad imprägniert. Allerdings können die im Querschnitt etwa U-förmig über den Rand gebogenen Einfassungen nach der Montage am Öffnungsrand wieder auffedern und es entsteht dann zwischen Weichstoff und den Einfassungsschenkelenden ein Spalt, durch den das Imprägniermittel beim Tauchen in den Weichstoff unterhalb der Einfassungen einfliesst. Die Dichtungen besitzen dann an den eingefassten Öffnungsrändern gegebenenfalls nachteilig eine zu niedrige Fliessgrenze. Ebenso ist es in anderen Fällen auch erforderlich, dass Zylinderkopfdichtungen auch im imprägnierten Restflächenbreich eine hohe Fliessgrenze besitzen.

Ferner ist es bekannt, imprägnierte Flachdichtungen durch Alterungsschutzmittelzusätze vor einer zum Verhärten und Verspröden des Imprägniermittels führenden Alterung, insbesondere beim längeren Lagern, besonders zu schützen. Nach der DE-PS 26 37 249 hat es sich als besonders vorteilhaft herausgestellt, wenn den Faservliesen kleinere Mengen an Phenolharz, wie insbesondere 0,2 bis 2 Gewichtsprozent, zum Alterungsschutz hinzugegeben werden. Eine Erhöhung der Fliessgrenze wird jedoch so nicht erzielt.

Der vorliegenden Erfindung liegt daher die Aufgabe zugrunde, eine flüssig imprägnierte Weichstoffflachdichtung, bei der das Imprägniermittel in der einbaufähigen Flachdichtung zu einem plastischen bis elastischen Zustand vernetzt ist, wie insbesondere eine Zylinderkopfdichtung, zu schaffen, dessen Fliessgrenze sowohl im Restflächenbereich als auch im Einfassungsbereich wesentlich erhöht ist. Die Dichtung soll dabei möglichst einfach und kostensparend herzustellen sein.

Erfindungsgemäss wird diese Aufgabe durch eine Weichstoffflachdichtung gelöst, welche zusätzlich duromere Kunstharze enthält, die vor der Flüssigimprägnation in das Faservlies eingebracht sind. Der Gehalt an duromeren Kunstharzen beträgt zwischen 3 und 15 Gewichtsprozent, bezogen auf das imprägnierte Faservlies und als duromere Kunstharze werden bevorzugt Melaminharze, Epoxidharze und/oder Phenolharze verwendet.

Zur Herstellung der erfindungsgemässen imprägnierten Faservliese ist es wesentlich, dass die duromeren Kunstharze in einer bevorzugt noch reaktiven Form in den Faservliesen vor der eigentlichen Flüssigimprägnation im Faservlies vorhanden sind. Bei der bevorzugten Herstellung der Faservliese in einem bekannten Papierherstellungsverfahren geschieht dies, indem den Faseraufschlämmungen mit Bindemittelzusatz die Kunstharze in pulveriger bis feinkörniger Form in einem bevorzugt noch reaktiven vorvernetzten Zustand zugegeben werden, so dass nach dem Absieben des Faservlieses die Kunstharzteilchen auf den Fasern fein verteilt abgeschieden vorliegen. Die gegebenenfalls erforderliche Endvernetzung der Kunstharze kann dann nach dem Trocknen des Faservlieses entweder vor der Flüssigimprägnation oder nach der Flüssigimprägnation zusammen mit dem Imprägniermittel erfolgen.

Im Sinne der Erfindung können jedoch auch die duromeren Kunstharze in vernetzter oder vorvernetzter Form gelöst, suspendiert oder dispergiert den Faseraufschlämmungen zugegeben werden oder die Faservliese können vor der eigentlichen Flüssigimprägnation mit Lösungen, Dispersionen oder Suspensionen der vorvernetzten reaktiven oder endvernetzten Kunstharze vorimprägniert werden. Ebenso können bei Herstellung der Weichstoffaservliese durch Walzen aus plastischen Faserstoffmischungen mit Bindemitteln die Kunstharze diesen Mischungen zugemischt sein. Das gegebenenfalls erforderliche Endvernetzen der Kunstharze kann dann auch nach Fertigstellung der Faservliese vor der Imprägnation oder nach der Imprägnation beim Vernetzen des Imprägniermittels erfolgen.

Bei Prüfung des Verformungsverhaltens der fertiggestellten Dichtungen wurde gefunden, dass die Fliessgrenzen höher lagen als die Fliessgrenzen der kunstharzfreien und herkömmlich imprägnierten Flachdichtungen. Das auf den Fasern gleichmässig verteilt abgeschiedene Kunstharz scheint dabei vor allem beim Endvernetzen zusammen mit den Fasern ein stabiles Gerüst gebildet zu haben, welches durch die nachfolgende Flüssigimprägnation nicht zerstört wird. Das stabile Gerüst aus Fasern und Kunstharz ist dann stärker auf Druck belastbar und besitzt somit eine erhöhte Fliessgrenze.

Die erfindungsgemässe Flachdichtung weist folglich eine erhöhte Fliessgrenze sowohl im Restflächenbereich als auch im Weichstoffbereich unterhalb der Einfassungen auf. Gleichzeitig besitzt die Dichtung aber auch die bekannten durch Flüssigimprägnation erzielbaren verbesserten Eigenschaften, insbesondere in bezug auf ihre Querschnittsdichtigkeit und Zugfestigkeit.

Durch die Erfindung ist somit eine imprägnierte Flachdichtung geschaffen, die insbesondere im Bereich unterhalb der Einfassungen an den Öffnungsrändern auch bei an und für sich unerwünschtem Einfliessen von Imprägniermittel mit hohen Dichpressungsdrücken belastet werden kann, und die somit eine verbesserte Abdichtgüte besitzt. Gefunden wurde dabei, dass Flachdichtungen gegebenenfalls auch vor dem Einfassen der Öffnungsränder bevorzugt durch Tauchen flüssigimprägniert werden können, und die so hergestellten Dichtungen noch eine gute Abdichtung auch an den Öffnungen besitzen. Durch die hohe Fliessgrenze des Weichstoffmaterials im Restflächenbereich kann die Dichtung auch in speziellen Einsatzfällen, zum Beispiel als Zylinderkopfdichtung in hochbelastbaren Dieselmotoren, eingesetzt werden.

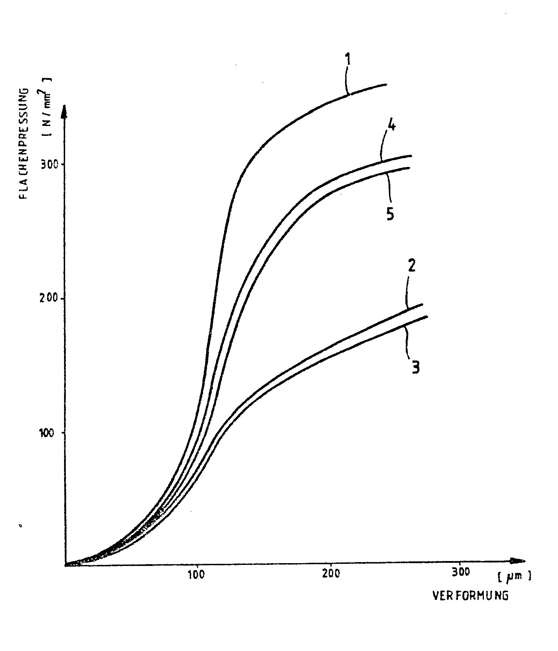

Die Abbildung zeigt das Verformungsverhalten verschiedener Zylinderkopfdichtungen in Abhängigkeit von der Flächenpressung, gemessen am Einfassungsbereich und im Restflächenbereich.

Die Zylinderkopfdichtung I ist eine übliche nichtimprägnierte Zylinderkopfdichtung aus einem üblichen Asbestfaservlies mit metallischer Verstärkung. Ihr Verformungsverhalten an der Einfassung und im Restflächenbereich ist durch die Kurve 1 wiedergegeben.

Die Zylinderkopfdichtung II ist die Zylinderkopfdichtung I, die zusätzlich, wie in der DE-AS 23 04 505 angegeben, imprägniert wurde und die Kurven 2 und 3 zeigen das Verformungsverhalten der Dichtung unter Flächenpressung an der Einfassung und im Restflächenbereich.

Die Zylinderkopfdichtung III ist die Zylinderkopfdichtung II, welche zusätzlich 11 Gewichtsprozent eines Epoxidharzes enthält, das vor der Flüssigimprägnation in das Faservlies eingebracht wurde. Die Kurven 4 und 5 zeigen das Verformungsverhalten der Dichtung unter Flächenpressung, gemessen im Einfassungsbereich und im Restflächenbereich.

Der Anstieg der Kurve 1, darstellend das Verformungsverhalten der nichtimprägnierten Flachdichtung, beginnt erst bei einer Flächenpressung von über 300 $(N/mm^2)$ stärker abzufallen und zeigt somit das günstigste Verformungsverhalten. Die Kurven 2 und 3, gemessen an der imprägnierten Dichtung, zeigen schon bei Drücken weit unter 200 $(N/mm^2)$ einen stärkeren Abfall und somit das ungünstigste Verformungsverhalten. Die erfinderische Flachdichtung zeigt einen Kurvenverlauf 4 und 5, dessen stärkerer Abfall knapp unter 300 $(N/mm^2)$ liegt. Diese Flachdichtung zeigt damit gegenüber der nichtimprägnierten Flachdichtung eine nur geringfügig niedrigere Verformungscharakteristik.

## Patentansprüche

1. Imprägnierte Weichstoffflachdichtung, wie insbesondere eine Zylinderkopfdichtung für Verbrennungskraftmaschinen, bestehend aus einem gegebenenfalls metallisch verstärkten Faservlies aus asbesthaltigen oder asbestfreien Fasern oder Fasergemischen organischen oder anorganischen Ursprungs, einem Bindemittel und gegebenenfalls einem Füllstoff in der Form pulveriger bis feinkörniger Materialien sowie einer Flüssigimprägnation des Faservlieses mit einer vorvernetzbaren Flüssigkeit, welche in der einbaufertigen Flachdichtung zu einem plastischen bis elastischen Endzustand vernetzt ist, dadurch gekennzeichnet, dass die Flachdichtung im Faservlies fein verteilt zusätzlich 3 bis 15 Gewichtsprozent, bezogen auf das imprägnierte Faservlies, duromere Kunstharze enthält, die vor der Flüssigimprägnation in das Faservlies eingebracht sind.

2. Flachdichtung nach Anspruch 1, dadurch gekennzeichnet, dass die duromeren Kunstharze aus Epoxidharzen, Melaminharzen und/oder Phenolharzen bestehen.

3. Verfahren zur Herstellung der Flachdichtung nach den Ansprüchen 1 und 2, dadurch gekennzeichnet, dass bei Herstellung des Faservlieses nach einem bekannten Papierherstellungsverfahren die duromeren Kunstharze in pulveriger bis feinkörniger Form im festen Zustand, im dispergierten Zustand, im suspendierten Zustand oder in gelöster Form den Faseraufschlämmungen zugegeben werden, und dass daran anschliessend die Faservliese und danach die einbaufertigen imprägnierten Flachdichtungen wie üblich hergestellt werden.

4. Verfahren zur Herstellung der Flachdichtung nach den Ansprüchen 1 bis 3, dadurch gekennzeichnet, dass die duromeren Kunstharze im reaktiven vorvernetzten Zustand eingesetzt werden, und dass die Endvernetzung der Kunstharze im Faservlies vor der Imprägnation oder nach der Imprägnation während der Vernetzung des Imprägniermittels erfolgt.

## Revendications

1. Joint plat d'étanchéité en matériau compressible imprégné, comme en particulier un joint de culasse de cylindre pour moteurs à combustion, constitué par un non-tissé éventuellement renforcé en métal en fibres contenant ou non de l'amiante ou en mélanges de fibres d'origine organique ou non, par un liant et le cas échéant par un matériau de remplissage sous forme de matériaux en poudres jusqu'en grains fins, ainsi que par une imprégnation liquide du non-tissé avec un liquide préréticulable qui est réticulé dans le joint plat d'étanchéité prêt à être monté dans un état final plastique à élastique, caractérisé en ce que le joint plat d'étanchéité contient finement réparti dans le non-tissé 3 à 15 pour cent de son poids, ramenés au non-tissé imprégné, de résines artificielles duromères supplémentaires qui sont mises en place dans le non-tissé avant l'imprégation liquide.

2. Joint plat d'étanchéité d'après la revendication 1, caractérisé en ce que les résines artificielles duromères consistent en résines époxy, en résines mélamine et/ou en résines phénol.

3. Procédé de fabrication de joints plats d'étanchéité selon la revendication 1 ou la revendication 2, caractérisé en ce que, lors de la fabrication du non-tissé selon un procédé connu de fabrication du papier, les résines artificielles duromères sont mélangées à la suspension de fibres sous forme de poudres jusqu'à des grains fins à l'état solide, à l'état dispersé, à l'état de suspension ou en solution et en ce qu'ensuite, les non-tissés, puis les joints plats d'étanchéité inprégnés prêts à être montés, sont fabriqués de façon habituelle.

4. Procédé de fabrication d'un joint plat d'étanchéité selon les revendications 1 à 3, caractérisé en ce que les résines artificielles duromères sont placées dans un état réactif préréticulé et en ce que la réticulation finale des résines artificielles a lieu dans le non-tissé pendant la réticulation du matériau dimprégnation avant l'imprégnation ou après l'imprégnation.

## Claims

1. An impregnated flat gasket of soft material such as in particular a cylinder head gasket for internal combustion engines, comprising a possibly metal-reinforced fibre fleece of asbestos-bearing or asbestos-free fibres or fibre mixes of organic or inorganic origin, a binding agent and possibly a filler in the form of powdery to fine-grain materials, and a fluid impregnation of the fibre fleece with a pre-cross-linkable fluid which in the flat gasket when ready for fitting is cross-linked to a plastic to elastic final condition, characterised in that the flat gasket additionally contains in finely divided form in the fibre fleece from 3 to 15% by weight with respect to the impregnated fibre fleece of thermosetting synthetic resins which are introduced into the fibre fleece prior to the fluid impregnation operation.

2. A flat gasket according to claim 1 characterised in that the thermosetting synthetic resins comprise epoxy resins, melamine resins and/or phenol resins.

3. A method for making a flat gasket according to the claims 1 and 2 characterised in that by making the fibre fleece by one of the known paper making processes the thermosetting synthetic resin is introduced into a powdered or fine-grained form, in a solid, dispersed suspended or dissolved state to the fibre slurry and that in the following steps the fibre fleece and the impregnated and usable flat gasket is completed in a common way.

4. A method for making a flat gasket according to the claims 1 to 3 characterised in that the thermosettling synthetic resin is introduced into a partly cross-linked reactive state and that the cross-linking of the thermosetting resin is completed in the fibre fleece prior or after said impregnating step or together with the crosslinkking of the impregnating agent.

- 1 -